# EUROPEAN PATENT APPLICATION

(11) **EP 3 089 515 A1**
(43) Date of publication of application: **02.11.2016**
(21) Application number: 15305666.8
(22) Date of filing: 30.04.2015
(51) Int. Cl.: H04W 36/14, H04W 36/00

(54) **APPARATUSES, METHODS AND COMPUTER PROGRAMS FOR A MOBILITY MANAGEMENT UNIT OF A FIRST AND A SECOND MOBILE COMMUNICATION SYSTEM AND A MOBILE TRANSCEIVER**

(71) Applicant: ALCATEL LUCENT, 92100 Boulogne-Billancourt (FR)
(72) Inventor: Halbauer, Hardy, 70435 Stuttgart (DE); Doetsch, Uwe, 70435 Stuttgart (DE); Braun, Volker, 70435 Stuttgart (DE); Bakker, Hajo, 70435 Stuttgart (DE)
(74) Representative: 2SPL Patentanwälte PartG mbB

(57) **Abstract**

Embodiments provide apparatuses (10; 20; 30), methods and computer programs suitable for mobility management units (100; 200) of a first (1000) and a second (2000) mobile communication system and a mobile transceiver (300). The apparatus (10) is suitable for the mobility management unit (100) of the first mobile communication system (1000). The apparatus (10) comprises at least one input (12) to obtain information related to a cluster of base station transceivers (150) of the first mobile communication system (1000) from a mobility management unit (200) of a second mobile communication system (2000). The information related to the cluster of base station transceivers comprises information related to one or more base station transceivers of the first mobile communication system (1000). A mobile transceiver (300) is within a vicinity of a base station transceiver (250) of the second mobile communication system (2000) and within a vicinity of the one or more base station transceivers. The apparatus (10) further comprises a control module (14) to effect data buffering of payload data for the mobile transceiver (300) at the one or more base station transceivers of the cluster of base station transceivers (150) based on the information related to the cluster of base station transceivers.

## Description

### Technical Field

Embodiments relate to apparatuses, methods and computer programs suitable for mobility management units of a first and a second mobile communication system and mobile transceivers, more specifically, but not exclusively, to determining information related to a cluster of base station transceivers in a vicinity of a mobile transceiver and to effect data buffering of payload data based on the information related to the cluster of base station transceivers.

### Background

This section introduces aspects that may be helpful in facilitating a better understanding of the invention(s). Accordingly, the statements of this section are to be read in this light and are not to be understood as admissions about what is in the prior art or what is not in the prior art.

Communication in higher frequency ranges than used by today's classical wireless systems, like 11-300GHz with so-called mm-waves, may face the challenge to exploit Line-Of-Sight (LOS), Non LOS (NLOS), or reflected paths for e.g. small cell backhaul or access applications which may use high gain antennas with steerable beams to overcome the high path loss. Due to the specific mm-wave propagation properties the channel may often consist only of one or two spatially separated paths, and a connection between a transmitter and a receiver may only be established when pointing a main lobe of an antenna pattern or beam of a high gain and narrow Half Power Beam Width (HPBW), for example using an antenna array, into the direction of the signal. However, the direction of the strongest path might not be known and a beam might not be steered initially into the right direction.

In some cases, the communication may be based on a single path between a base station and a mobile transceiver. The single path may be based on a Line-Of-Sight path or a reflected path between the base station transceiver and the mobile transceiver. As objects may pass within the path, or the position of the mobile transceiver may change such that the path is blocked, the connection between the base station transceiver and the mobile transceiver may drop.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, methods and computer programs suitable for mobility management units of a first and a second mobile communication system and mobile transceivers. To allow for a fast handover of a mobile transceiver between base stations of the first mobile communication system, which may be a millimeter wave mobile communication system, a mobility management unit of a second mobile communication system, e.g. a Long Term Evolution (LTE) or Universal Mobile Telecommunications System (UMTS) mobile communication system may determine a cluster of base station transceivers of the first mobile communication system in a vicinity of the mobile transceiver. A mobility management unit of the first mobile communication system may effect a buffering of payload data and may determine handover information for the mobile transceiver based on the cluster of base station transceivers. As the mobile transceiver may be connected to the second mobile communication system, which may offer a wider and more stable coverage area compared to a millimeter wave mobile communication system, the mobile transceiver may obtain configuration information related to the cluster of base station transceivers via the second mobile communication system, to speed up the discovery process. Also, as the mobile transceiver may obtain information related to base station transceivers of the cluster of base station transceivers, a handover between base stations of the cluster may be facilitated. To support this handover, the information related to the cluster of base station transceivers of the first mobile communication system may be used to effect data buffering of payload data in the corresponding base station transceivers or in an intermediary unit.

Embodiments provide an apparatus suitable for a mobility management unit of a first mobile communication system. The apparatus comprises at least one input to obtain information related to a cluster of base station transceivers of the first mobile communication system from a mobility management unit of a second mobile communication system. The information related to the cluster of base station transceivers comprises information related to one or more base station transceivers of the first mobile communication system. A mobile transceiver is within a vicinity of a base station transceiver of the second mobile communication system and within a vicinity of the one or more base station transceivers. The apparatus further comprises a control module to effect data buffering of payload data for the mobile transceiver at the one or more base station transceivers of the cluster of base station transceivers based on the information related to the cluster of base station transceivers. In at least some embodiments, the apparatus may enable an accelerated handover procedure in the first mobile communication system by effecting the data buffering of payload data, so in case of a handover, the data may be available at the corresponding base station transceiver of the cluster of base station transceivers, and a seamless or accelerated transition may be provided. As the data buffering might be for a limited number of base station transceivers of the cluster of base station transceivers, a traffic, overhead and complexity of keeping multiple buffers or having multiple fast connections for buffer transfer may be reduced.

In various embodiments, the at least one input may be configured to obtain information related to one or more measurement results measured by the mobile transceiver on radio signals of the cluster of base station transceivers. The control module may be configured to effect the data buffering based on the information related to the one or more measurement results. The at least one input may be configured to obtain information related to a location of the mobile transceiver. The control module may be configured to effect the data buffering based on the information related to the location of the mobile transceiver and information related to the location of the one or more base station transceivers of the cluster of base station transceivers. In various embodiments, the information related to the location may be used to choose a base station transceiver of the cluster of base station transceivers, e.g. based on a distance or a Line-of-Sight (LOS). In at least some embodiments, the measurement results may be used to choose a base station transceiver of the cluster of base station transceivers, which may have advantageous channel properties, for data buffering, as the mobile transceiver may be associated with that base station transceiver.

In at least some embodiments, the apparatus may further comprise at least one output configured to provide handover information. The control module may be further configured to determine the handover information based on the information related to the cluster of base station transceivers and the information related to the one or more measurement results. The control module may be configured to determine the handover information based on the information related to the cluster of base station transceivers, the information related to the location of the one or more base station transceivers of the cluster of base station transceivers and the information related to the location of the mobile transceiver. Determining both handover information and effecting the data buffering of payload data may lower a coordination overhead and may provide a seamless or accelerated handover between base station transceivers of the first mobile communication system.

In various embodiments, the control module may be configured to provide a distribution control signal for a data distribution module to effect the data buffering. The data distribution module may be exterior to the apparatus, e.g. in a network component of the mobile communication system, or may be comprised in the apparatus. Using an external data distribution module may help separate the data plane from the control plane and may reduce a complexity of the apparatus.

In at least some embodiments, the apparatus may comprise the data distribution module. The data distribution module may be configured to forward payload data to at least a subset of the one or more base station transceivers of the cluster of base station transceivers. If the data distribution module is comprised in the apparatus, a latency between the control module and the data distribution module may be reduced, and further processing may be performed by the control module.

In various embodiments, the control module may be configured to control the data distribution module to buffer the payload data and to forward the payload data to a base station transceiver of the cluster of base station transceivers connected or to be connected to the mobile transceiver. The data distribution module may decrease a redundancy of buffered data and may enable an accelerated handover of the mobile transceiver.

In at least some embodiments the control module may be configured to control the data distribution module to forward the payload data to the one or more base station transceivers of the cluster of base station transceivers and to control the buffering at the one or more base station transceivers. Due to the instant availability of the buffered data at the one or more base station transceivers of the cluster of base station transceivers, an accelerated or seamless handover may be enabled.

In various embodiments, the control module may be further configured to effect data routing of payload data for the mobile transceiver to the one or more base station transceivers of the cluster of base station transceivers based on the information related to the cluster of base station transceivers. The control module may effect the data routing to accelerate a handover procedure and/or accelerate the availability of payload data at a base station transceiver.

Embodiments further provide an apparatus suitable for a mobility management unit. The mobility management unit monitors a mobility of a mobile transceiver in a first mobile communication system. The mobility management unit is comprised in a second mobile communication system. The apparatus comprises at least one input to obtain information related to one or more measurement results measured by a mobile transceiver on radio signals of one or more base station transceivers of the second mobile communication system. The apparatus further comprises at least one output to provide information related to a cluster of base station transceivers of the first mobile communication system to a mobility management unit of the first mobile communication system. The information related to the cluster of base station transceivers comprises information related to one or more base station transceivers of the first mobile communication system. The mobile transceiver is within a vicinity of a base station transceiver of the second mobile communication system and within a vicinity of the one or more base station transceivers. The base station transceiver is comprised in the second mobile communication system and the one or more base station transceivers are comprised in the first mobile communication system. The apparatus further comprises a control module to determine the information related to the cluster of base station transceivers based on the information related to the one or more measurement results measured by the mobile transceiver on the radio signals of the one or more base station transceivers of the second mobile communication system and based on information related to a location of the one or more base station transceivers of the first mobile communication system. In various embodiments, the apparatus may enable an accelerated handover procedure for the mobile transceiver by determining the cluster of base station transceivers based on the position of the mobile transceiver and based on the information related to the one or more measurements, so the mobile transceiver can perform the handover on a limited cluster of base station transceivers. As a limited number of base station transceivers of the first mobile communication system in a vicinity of the mobile transceiver might be comprised in the cluster of base station transceivers, a data transmission overhead may be reduced and additional configuration information on the one or more base station transceivers of the cluster of base station transceivers may be provided to the mobile transceiver for accelerated handover.

In at least some embodiments, the control module may be configured to determine information related to a location of the mobile transceiver. The control module may be configured to determine the information related to the cluster of base station transceivers based on a proximity and/or siting of the mobile transceiver and the one or more base station transceivers. The proximity and/or siting of the mobile transceiver and the one or more base station transceivers may be used to determine the base station transceiver to be connected to the mobile transceiver, e.g. based on a distance or a line of sight, e.g. to increase an available throughput and reduce a number of handovers.

In various embodiments, the control module may be further configured to monitor the location of the mobile transceiver. The control module may be further configured to update the information related to the cluster of base station transceivers based on the information related to the location of the mobile transceiver and to provide the updated information related to the cluster of base station transceivers. Providing updated information related to the cluster of base station transceivers, e.g. when the mobile transceiver has moved, may enable the information related to the cluster of base station transceivers to comprise information related to currently relevant base station transceivers for a current location of the mobile transceiver.

In at least some embodiments, the control module may be configured to forward the information related to the measurement results measured by the mobile transceiver on the radio signals of the cluster of base station transceivers obtained via the second mobile communication system to a mobility management unit of the first mobile communication system. Forwarding the information related to the measurement results to the mobility management unit of the first mobile communication system may supply the mobility management unit of the first mobile communication system with the information related to the measurement results if the mobile transceiver is currently not connected to the first mobile communication system.

In various embodiments, the control module may be configured to determine handover selection information based on the information related to the location of the mobile transceiver and the information related to the location of the one or more base station transceivers, wherein the handover selection information comprises information related to handover to the second mobile communication system. If the control module determines that for the location of the mobile transceiver a handover to the second mobile communication system may be advantageous, an inter system handover may be initiated.

Embodiments further provide an apparatus suitable for a mobile transceiver of a first mobile communication system and a second mobile communication system. The apparatus comprises at least one transceiver module to communicate with the first mobile communication system and the second mobile communication system. The at least one transceiver module is configured to communicate with the first mobile communication system and the second mobile communication system at the same time. The at least one transceiver module is further configured to obtain information related to a cluster of base station transceivers of the first mobile communication system. The information related to the cluster of base station transceivers comprises information related to one or more base station transceivers of the first mobile communication system. The mobile transceiver is within a vicinity of a base station transceiver of the second mobile communication system and within a vicinity of the one or more base station transceivers. The apparatus further comprises a control module to determine information related to one or more measurement results at the mobile transceiver measured on radio signals of the cluster of base station transceivers based on the information related to the cluster of base station transceivers of the first mobile communication system. The control module is further configured to provide the information related to the one or more measurement results at the mobile transceiver measured on the radio signals of the cluster of base station transceivers via the transceiver module. The control module is further configured to determine information related to one or more measurement results at the mobile transceiver measured on radio signals of the one or more base station transceivers of the second mobile communication system. The control module is further configured to provide the information related to the one or more measurement results at the mobile transceiver measured on the radio signals of the one or more base station transceivers of the second mobile communication system to a mobility management unit of the second mobile communication system using the transceiver module. In various embodiments, the information related to the cluster of base station transceivers may reduce an overhead of measuring base station transceivers of the first mobile communication system, as the number of base station transceivers in the cluster of base station transceivers may be limited. The information related to the measurement results measured on the radio signals of the first and second mobile communication system may be used to determine the information related to the cluster of base station transceivers and to determine handover information for the mobile transceiver.

In at least some embodiments, the at least one transceiver module may be configured to obtain the information related to the cluster of base station transceivers of the first mobile communication system via the second mobile communication system. Using the second mobile communication system to obtain the information related to the cluster of base station transceivers may enable the mobile transceiver to obtain the information related to the cluster of base station transceivers while the mobile transceiver is not connected to the first mobile communication system.

In various embodiments, the control module may be further configured to obtain information related to a location of one or more base station transceivers comprised in the cluster of base station transceivers and/or information related to a transmission configuration of the one or more base station transceivers comprised in the cluster of base station transceivers. The control module may be configured to control the at least one transceiver module based on the information related to the location and/or the information related to the transmission configuration. The information related to the location of the one or more base station transceivers comprised in the cluster of base station transceivers and/or the information related to the transmission configuration may be used to accelerate an association of the mobile transceiver with base station transceivers of the cluster of base station transceivers, e.g. by pre-configuring a beam direction, transmission parameters and/or discovery timing of the one or more base station transceivers.

Embodiments further provide a method suitable for a mobility management unit of a first mobile communication system. The method comprises obtaining information related to a cluster of base station transceivers of the first mobile communication system from a mobility management unit of a second mobile communication system. The information related to the cluster of base station transceivers comprises information related to one or more base station transceivers of the first mobile communication system. A mobile transceiver is within a vicinity of a base station transceiver of the second mobile communication system and within a vicinity of the one or more base station transceivers. The method further comprises effecting data buffering of payload data for the mobile transceiver at the one or more base station transceivers of the cluster of base station transceivers based on the information related to the cluster of base station transceivers.

Embodiments further provide a method suitable for a mobility management unit. The mobility management unit monitors a mobility of a mobile transceiver in a first mobile communication system. The mobility management unit is comprised in a second mobile communication system. The method comprises obtaining information related to one or more measurement results measured by a mobile transceiver on radio signals of one or more base station transceivers of the second mobile communication system. The method further comprises providing information related to a cluster of base station transceivers of the first mobile communication system to a mobility management unit of the first mobile communication system. The information related to the cluster of base station transceivers comprises information related to one or more base station transceivers of the first mobile communication system. The mobile transceiver is within a vicinity of a base station transceiver of the second mobile communication system and within a vicinity of the one or more base station transceivers. The method further comprises determining the information related to the cluster of base station transceivers based on the information related to the one or more measurement results measured by the mobile transceiver on the radio signals of the one or more base station transceivers of the second mobile communication system and based on information related to a location of the one or more base station transceivers of the first mobile communication system.

Embodiments further provide a method suitable for a mobile transceiver of a first mobile communication system and a second mobile communication system. The method comprises communicating with the first mobile communication system and the second mobile communication system. The mobile transceiver is configured to communicate with the first mobile communication system and the second mobile communication system at the same time.

The method further comprises obtaining information related to a cluster of base station transceivers of the first mobile communication system. The information related to the cluster of base station transceivers comprises information related to one or more base station transceivers of the first mobile communication system. The mobile transceiver is within a vicinity of a base station transceiver of the second mobile communication system and within a vicinity of the one or more base station transceivers.

The method further comprises determining information related to one or more measurement results at the mobile transceiver measured on radio signals of the cluster of base station transceivers based on the information related to the cluster of base station transceivers of the first mobile communication system. The method further comprises providing the information related to the one or more measurement results at the mobile transceiver measured on the radio signals of the cluster of base station transceivers. The method further comprises determining information related to one or more measurement results at the mobile transceiver measured on radio signals of the one or more base station transceivers of the second mobile communication system. The method further comprises providing the information related to the one or more measurement results at the mobile transceiver measured on the radio signals of the one or more base station transceivers of the second mobile communication system to a mobility management unit of the second mobile communication system.

Embodiments further provide a computer program having a program code for performing the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
- Fig. 1: illustrates a block diagram of an embodiment of an apparatus suitable for a mobility management unit of a first mobile communication system;
- Fig. 2: illustrates a block diagram of a first and a second mobile communication system, wherein a connection of base station transceiver of a cluster of base station transceivers of the first mobile communication system is blocked by a moving obstacle;

- Fig. 3: illustrates a block diagram of a first and a second mobile communication system, wherein a mobile transceiver moves out of range of a cluster of base station transceivers;
- Fig. 4: illustrates a block diagram of an embodiment of an apparatus suitable for a mobility management unit of a first mobile communication system providing a distribution control signal for a data distribution module;
- Fig. 5: illustrates a block diagram of an embodiment of a buffering scenario;
- Fig. 6: illustrates a block diagram of an embodiment of a buffering scenario;
- Fig. 7: illustrates a block diagram of an embodiment of an apparatus suitable for a mobility management unit of a first mobile communication system further comprising a data distribution module;
- Fig. 8: illustrates a block diagram of an embodiment of an apparatus suitable for a mobility management unit of a first mobile communication system further comprising an output configured to provide handover information;
- Fig. 9: illustrates a block diagram of an embodiment of an apparatus for a mobility management unit of a second mobile communication system;
- Fig. 10: illustrates a block diagram of an embodiment of an apparatus suitable for a mobile transceiver;
- Fig. 11: illustrates a flow chart of an embodiment of a method suitable for a mobility management unit of a first mobile communication system
- Fig. 12: illustrates a flow chart of an embodiment of a method for a mobility management unit of a second mobile communication system; and
- Fig. 13: illustrates a flow chart of an embodiment of a method suitable for a mobile transceiver.

### Description of Embodiments

Various example embodiments will now be described more fully with reference to the accompanying drawings in which some example embodiments are illustrated. In the figures, the thicknesses of lines, layers or regions may be exaggerated for clarity. Optional components are illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Future 5^{th} Generation (5G) wireless/mobile access may use MilliMeter-Wave (MMW) frequencies to enable multi-Gigabit per second (Gbps) data rates. The 5G MMW air interface may be integrated with a legacy International Mobile Telecommunications (IMT) system (e.g. Long Term Evolution (LTE)), e.g. to mitigate for patchy coverage at MMW frequencies. In the sequel a dual connectivity scenario may be assumed, where a Mobile Transceiver (MT) may simultaneously support an IMT link and a MMW link. The Mobile Transceiver may correspond to a mobile transceiver 300 as introduced in the sequel, the MMW link may correspond to a first mobile communication system as introduced in the sequel and the IMT link may correspond to a second mobile communication system as introduced in the sequel.

Due to the propagation properties (high path loss, low number of paths between a Base Station (BS) and MT) in the MMW band, the detection of a MMW BS or performing HandOver (HO) measurements may for example be performed as follows:
▪ MT and BS may use high gain beam pattern. This may require a time-consuming search algorithm to find the correct beam pattern weights.
▪ MT and BS may perform measurements on an omnidirectional antenna pattern. This may lead to longer measurement durations (e.g. correlation over many pilot signals due to the low received power), which may give useless results if the mobility is high and/or the coherence time of the radio channel is smaller than the required measurement time.

Embodiments may provide an efficient and reliable solution for the MMW BS detection, the mobility handling and handover functionality of the MT connected to the MMW link. As the MT may have a dual connection to an IMT band link, this connection might be used to support the MMW mobility handling.

In the following, generic functional entities for a 5G network may be assumed:
▪ Radio Resource Management (RRM): Entity that may be responsible for the allocation of radio resources, which may include the packet scheduler, and may be comprised in a BS.
▪ Radio Resource Control (RRC): Entity that may be responsible for the configuration of radio parameters, both cell specific parameters (carrier frequency, BW, etc.) and MT-specific parameters (control signaling, semi-static resource assignments). May also be responsible for admission/release of users (radio admission control). May be centralized or co-sited with a BS.
▪ Mobility Management (MoM): Entity that may receive handover measurement reports (and possibly additional information such as traffic load per cell) and that may instruct BS and MT to perform a handover. May be centralized and possibly co-sited with RRC, or may be co-sited with BS. (The actual adaptation of the user plane paths may be controlled from within the radio access or core network.)

MMW-MoM (IMT-MoM) denotes the entity responsible for MoM of the MMW link (IMT link) etc., and the respective entities may be assumed to be able to communicate with each other. The MMW-MoM may correspond to a mobility management unit 100 of the first mobile communication system 1000 as introduced in the sequel, and the IMT-MoM may correspond to a mobility management unit 200 of the second mobile communication system 2000 as introduced in the sequel.

An MMW link may operate stand-alone, and a handover solution similar to a LTE handover procedure may be applied on the MMW link. Problems of this solution are mentioned in the section above.

An additional issue with handover and mobility handling on MMW links may be that the MMW link may more easily be blocked by e.g. large vehicles crossing the almost Line-Of-Sight (LOS) connection, or movement of the user causing shadowing of the serving MMW BS. Further, due to a higher path loss of MMW connections, in some embodiments, it may be assumed that the density of the MMW BS is higher than for the IMT link, and that a moving MT may require more frequently a HO procedure in the MMW band than in the IMT band.

Together with the generic drawbacks of the MMW range (as described in the previous section), the BS detection and HO measurements in case of a stand-alone operation of the MMW link may require a higher amount of signaling and take more time than in the IMT band. In addition, it might be less reliable. This may contradict the requirements for faster and more precise HO especially in case of sudden blocking by moving obstacles or user movement.

Basic idea of at least some embodiments may be, that the IMT link may be used to assist the MMW BS detection, mobility handling and handover procedure on the MMW link to achieve a faster and more reliable HO in case of mobility and blocking.

In the following, the term "MMW BS serving cluster" may be used, which may correspond to a "cluster of base station transceivers 150 of the first mobile communication system 1000" as introduced in the sequel. It may be characterized as follows:
It may be assumed that within the cell range of an IMT link, or within a vicinity of the mobile communication system, there may be multiple MMW BS which potentially can serve the MT. The MMW data/user plane may be connected to all potentially serving MMW BS, to allow a fast change of MMW BS in case of blocking.

MMW connection to MT might, in various embodiments, be realized by one (e.g. the best serving) MMW BS. This may be seen as a multipoint to point transmission, where only one point at a time is serving the MT, but data to be transmitted is available at each or a subset of the MMW BS of a cluster.

The assistance through the IMT link may comprise
▪ identification of a mobility status of an MT
▪ selection of a HO procedure for fast and efficient MMW HO
▪ dynamic MMW BS serving cluster definition according to the MT mobility status

As a consequence of a new MMW BS serving cluster definition a re-routing of user data to the actual MMW BS serving cluster may be triggered. In at least some embodiments, the user data for a MMW link may be provided to all MMW BS of a cluster simultaneously to support fast HO, although only one MMW BS might be serving the MT at a time. If the cluster changes, also the user data may be provided to the MMW BS forming the new cluster.

To define a MMW BS serving cluster for a specific MT, the measurements from the IMT link may be used. It may be assumed that within the network a configuration data base exists. It may store location information of MMW and IMT BS, so that the potentially serving MMW BS locations within an IMT cell may be derived or may be explicitly known. This may be similar to using neighborhood relation tables as in current deployments, or it may be more advanced solutions taking actual position coordinates and/or LOS into account. So the MMW BSs to be probed (and their position) may be initially known to the MT, reducing the search time.

An exemplary implementation of a link setup is described in the following: A MT simultaneously connected via IMT and MMW links, or a MT connected to an IMT link prior to establishment of the MMW link, may carry out handover measurements on the MMW carrier(s) of the MMW BS indicated by the IMT-MoM. This MMW BS cluster may be defined according to the IMT cell(s) in which the MT is located. These MMW handover measurements may be reported to the MMW-MoM, and the MMW-MoM may instruct the MT to establish an MMW link. This mobility-related signaling between the IMT-MoM and the MT, and between MT and MMW-MoM, may e.g. be exchanged via the IMT link.

Within a MMW BS serving cluster, regular HO measurements to MMW BS of the cluster may be performed. Therefore, depending on the knowledge of the mobility of the MT, the beam directions at MMW BS and MT from previous HO measurements may be used as initial starting point and subsequently refined for the new measurements, rather than being derived from an unknown status.

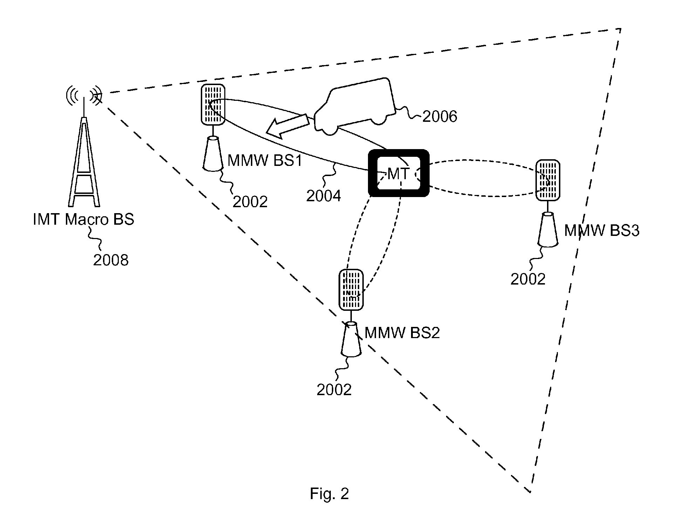

Different situations may lead to a HO requirement to another MMW BS, for example if the current MMW link 2004 is blocked by an obstacle 2006 (e.g. vehicle), shown in Figure 2. Here the MT may be handed over to another MMW BS within the MMW BS serving cluster 2002 consisting of MMW BS1, 2 and 3, and may be switched back within a short time frame. So the MT may be related to the same few MMW BS, between which the MT may be handed over. In this situation the IMT connection remains stable, and this may be detected e.g. by observing only minor changes in IMT HO measurements regularly provided to the IMT BS 2008.

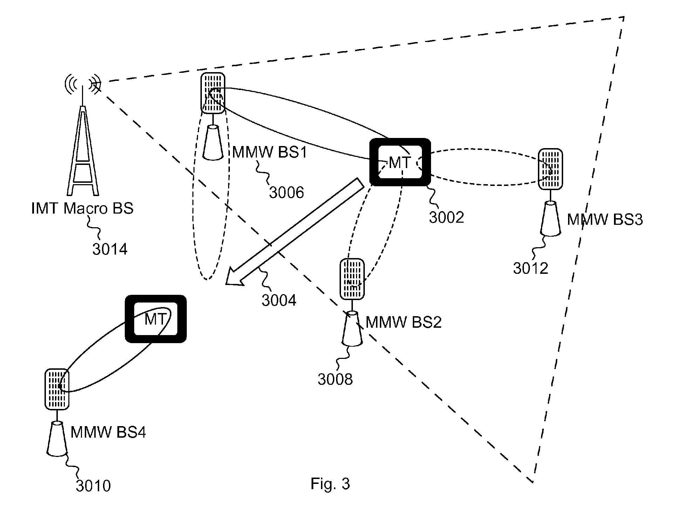

If the MT 3002 is moving 3004 and leaving the range of the MMW BS to which it is connected, as indicated in Figure 3, the MT 3002 may also require a handover. If the IMT cell is changing, the new IMT cell (e.g. 3014) may establish a new MMW BS serving cluster, e.g. MMW BS1 3006, 2 3008 and 4 3010 in Figure 3, discarding MMW BS3 3012. The MT 3002 may receive the new cluster information via signaling over the new IMT link. To support the new IMT cell, the old MMW BS serving cluster information might be transferred via an IMT BS to IMT BS interface (e.g. X2).

If the IMT cell is not changing, a dynamic definition of the new MMW BS cluster may also be required. The definition of the new configuration may be supported by analysis of the beam changes of the MMW BSs and by MT measurements on the IMT band which may give a (even coarse) location information, which may allow definition of an appropriate new MMW BS cluster by help of a data base. The MT may receive the new cluster information via signaling over the existing IMT link. The MT measurements might e.g. be based on second measurement event (e.g. an LTE A3 handover measurement event to trigger a HO (the first A3 measurement event may be used for cell to cell handover)) with a measurement report, followed by a periodical reporting of further measurement reports. The measurement reports may comprise the received signal strength from the serving IMT cell and further surrounding IMT cells. Based on these measurement reports the IMT BS might detect the MT mobility within the serving IMT cell as the received signal strength from the serving IMT cell and further surrounding IMT cells may change.

Subsequently, a sequence of an exemplary implementation is described. It may be assumed that the MS is connected to the IMT band and the MMW band:
▪ The MT establishes an IMT link.
▪ Over the IMT link the MS may receive information identifying the MMW BS serving cluster and the related MMW HO measurement configuration (which BS is measured, how often are measurements performed). The MMW BS may receive this information via the MMW-MoM, which may have an interface to the IMT-MoM.
▪ The MT may provide to the MMW-MoM a signal strength information of MMW BS of the defined serving cluster. This information may be exchanged either on the MMW channel or the IMT channel.
▪ On the IMT link, the MT may also perform HO measurements and provide information on IMT signal strength (own and adjacent cells) to identify the amount of mobility of the MT.
▪ If the IMT-MoM detects a movement of the MT between IMT cells, it may signal to the MMW-MoM an update of the MMW BS serving cluster, together with a HO measurement procedure adapted to higher mobility (i.e. searching for MMW BS with wider beams, measurements more often). This information might be derived from individual MMW BS measurements, or from supporting information from a network configuration data base. Since the movement direction with respect to the IMT area may be known, potential new MMW BS may be identified in a network configuration data base.
▪ If the IMT-MoM detects stationarity of the MT, the HO measurements and HO may be performed within a fixed MMW BS serving cluster.

To assist mobility between MMW BSs, the IMT link might be used to carry (part of) the signaling:
▪ The IMT link may provide information about the system parameters of the MMW links of the MMW BS serving cluster such as cell ID, carrier frequency, bandwidth and further configuration parameters. The MT may receive this information via the IMT link, either using dedicated or cell-specific signaling. A major benefit of embodiments may be a simplified cell search in the MT resulting in energy savings. When using cell-specific signaling, the MT may receive information about all the MMW cells in the vicinity of the IMT BS, whereas when using dedicated signaling the MT may receive information about a reduced set of MMW cells, i.e. the MMW BS serving cluster in the vicinity of the MT. The MMW BS serving cluster may be determined by using side information such as the MT geo-location or the current MMW serving cell.
▪ HO measurement configuration information, HO measurement reports and HO commands may be carried via the IMT link.

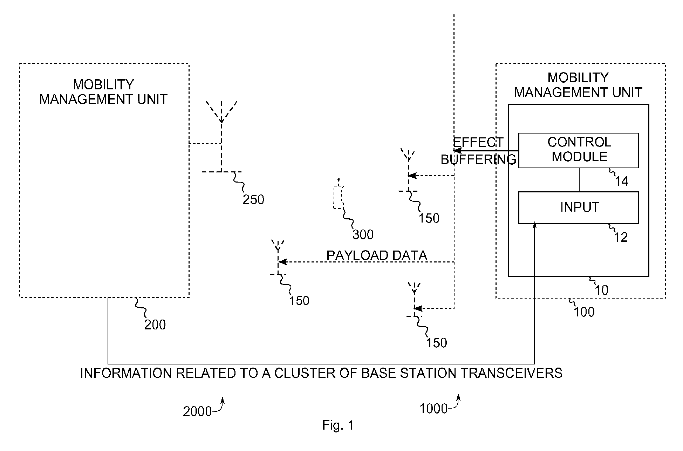

Fig. 1 illustrates a block diagram of an embodiment of an apparatus 10 suitable for a mobility management unit 100 of a first mobile communication system 1000. The apparatus 10 comprises at least one input 12 to obtain information related to a cluster of base station transceivers 150 of the first mobile communication system 1000 from a mobility management unit 200 of a second mobile communication system 2000. The information related to the cluster of base station transceivers comprises information related to one or more base station transceivers of the first mobile communication system 1000. A mobile transceiver 300 is within a vicinity of a base station transceiver 250 of the second mobile communication system 2000 and within a vicinity of the one or more base station transceivers.

In general, a mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a millimeter wave mobile communication system, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In at least some embodiments, the first mobile communication system 100 may correspond to a millimeter wave-based mobile communication system, and the second mobile communication system 2000 may correspond to an LTE, an LTE-A, a UMTS, a 5G, an EDGE, a GRPS or a GSM mobile communication system. In various embodiments, the first mobile communication 1000 system may operate using higher carrier frequencies than the second mobile communication system 2000.

A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers or carriers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In at least some embodiments, the information related to the cluster of base station transceivers may correspond to information related to a set of base station transceivers of the first mobile communication system. The information related to the cluster of base station transceivers may comprise information related to an identification of the one or more base station transceivers, and may further comprise information related to at least one element of the group of positions of the one or more base station transceivers, transmission configuration of the one or more base station transceivers, beam angles of the one or more base station transceivers, and timing information of the one or more base station transceivers.

The at least one input 12 may correspond to at least one interface for receiving information, which may be in digital (bit) values according to a specified code, within a module, between modules or between modules of different entities.

In at least some embodiments, the mobile transceiver 300 may be associated with the first mobile communication system 1000 and the second mobile communication system 2000. In various embodiments, the mobile transceiver 300 may be configured to communicate with the first mobile communication system 1000 and the second mobile communication system 2000 at the same time. In various embodiments, the vicinity of the base station transceiver 250 of the second mobile communication system may correspond to a radius around the base station transceiver 250 or a coverage area of the base station transceiver 250, and may be larger than a vicinity of one of the one or more base station transceivers. The vicinity of the one or more base station transceivers may correspond to a combined coverage of the one or more base station transceivers, and may be based on a LOS of the one or more base station transceivers.

In various embodiments, the mobility management unit 100 and the mobility management unit 200 may correspond to a network entity that may obtain handover measurement reports and that may determine handover instructions to instruct base station transceivers and mobile transceivers to perform a handover. In at least some embodiments, the mobility management units 100; 200 may obtain additional information such as traffic load per cell, and the handover instructions may be based on the additional information. The mobility management unit 100 and/or the mobility management unit 200 may be centralized and possibly co-sited with a radio resource controller, may be co-sited with a base station transceiver, or may be a separate network entity. In various embodiments, the mobility management units 100; 200 may be integrated or co-sited in the same module.

The apparatus 10 further comprises a control module 14 to effect data buffering of payload data for the mobile transceiver 300 at the one or more base station transceivers of the cluster of base station transceivers 150 based on the information related to the cluster of base station transceivers. In various embodiments, data transmitted via the first and second mobile communication systems 1000; 2000 may comprise control data and payload data, wherein control data may correspond to data sent solely to facilitate delivery and payload data may correspond to data transmitted via the mobile communication system which is not solely used to facilitate delivery. Payload data may also comprise data of a higher protocol level, e.g. control data and payload data of a higher protocol level of the ISO/OSI protocol stack. The buffering of payload data may correspond to storing of the payload data at a base station transceiver, e.g. at least one of the one or more base station transceivers, or making it accessible by a base station transceiver for transmission to the mobile transceiver 300.

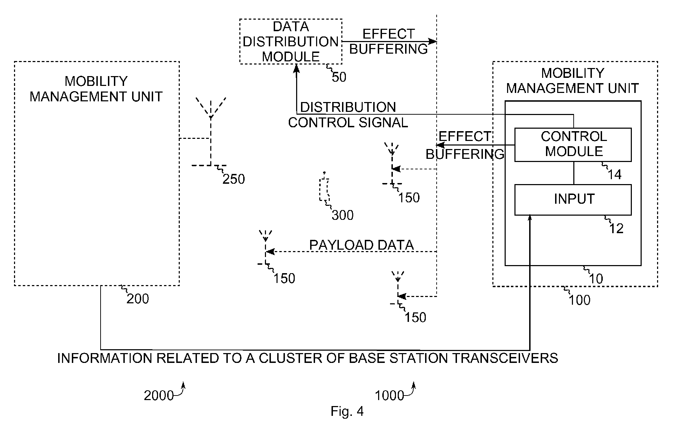

Fig. 4 illustrates a block diagram of an exemplary embodiment of the apparatus 10. In various embodiments, the control module 14 may be configured to provide a distribution control signal for a data distribution module 50 to effect the data buffering. In at least some embodiments, the data distribution module may correspond to a network entity, a gateway, a radio network controller, a content delivery network, or a control module of a network entity. The distribution control signal may comprise information related to buffering entities and information related to at least one element of the group of destination of the payload data, sequence numbers, buffer synchronization information, and buffer transfer control information.

For buffering, embodiments may use an LTE-like architecture, where data is buffered in the serving BS, and in case of a handover data pending in buffer is transferred to the target BS via an interface, e.g. an X2 interface. Alternatively or additionally, in various embodiments, the MMW BSs may be connected via a central Radio Network Controller (RNC), which may buffer the payload data, and which may forward the data packets to the serving BS. To enable seamless handover with reduced handover latencies, redundant buffering may be applied.

In at least some embodiments, the control module 14 may be configured to control the data distribution module 50 to buffer the payload data and to forward the payload data to a base station transceiver of the cluster of base station transceivers 150 connected or to be connected to the mobile transceiver 300. In various embodiments, the distribution module 50 may be comprised in a radio network controller, or may be comprised in a network entity connected to the cluster of base station transceivers 150.

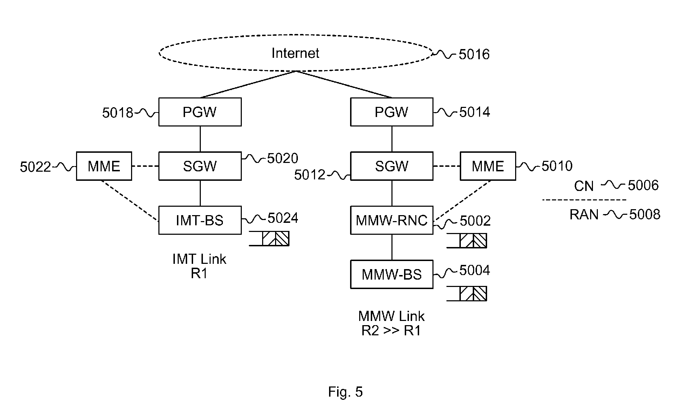

Fig. 5 shows a block diagram of a network architecture of an embodiment using redundant buffering in a RNC 5002, which may correspond to or comprise the data distribution module 50, and in a serving MMW-BS 5004, which may correspond to one base station transceiver of the cluster of base station transceivers 150. The MMW-BS 5004 may be connected to the MMW-RNC 5002, which may be transparent for the Core Network (CN) 5006. Buffering of payload data for the MMW-BS 5004 may take place in the MMW-RNC 5002 and simultaneously in the serving MMW-BS 5004. Forwarding of packets between the MMW-RNC 5002 and the MMW-BS 5004 may be performed above the Packet Data Convergence Protocol (PDCP) layer, which may facilitate the use of a conventional packet router as part of MMW-RNC 5002. The MMW-BS 5004 may report to the MMW-RNC 5002 the packets that have been successfully transmitted, and the MMW may remove these packets from its buffer. The MMW-RNC 5002 may decide upon the serving MMW-BS 5004. This may enable the MMW-RNC 5002 to transfer packets to the target MMW-BS 5004 prior to termination of the radio link of the source MMW-BS 5004, and may take care of redundant packets that are still pending in the buffer of the source MMW-BS. The MMW-RNC 5002 may inform the target MMW-BS 5004 about the sequence number of the first packet to be transmitted. In embodiments, the numbering scheme of the tunnel protocol between MMW-RNC 5002 and MMW-BS 5004 may be used as and/or be a basis for the sequence number. Fig. 5 further shows the distinction between the Radio Access Network (RAN) 5008 comprising the MMW-RNC 5002 and the MMW-BS 5004, and the Core Network 5006 comprising the connection to the Internet 5016. Fig. 5 further shows the Mobility Management Entity (MME) 5010, which may correspond to the mobility management unit 100, of the MMW mobile communication system, which may correspond to the first mobile communication system 1000. The MME 5010 is connected to the Serving GateWay 5012 of the MMW mobile communication system and the MMW-RNC 5002. Fig. 5 shows the Packet data network Gateway (PGW) 5014, which is connected to the SGW 5012 and the Internet 5016. Fig. 5 further shows a PGW 5018, which is connected to a SGW 5020, which is connected to a MME 5022 of the IMT mobile communication system, which may correspond to the second mobile communication system 2000. The MME 5022 may correspond to the mobility management unit 200. The MME 5022 and the SGW 5020 are connected to an IMT-BS 5024, which may correspond to the base station transceiver 250.

Alternatively or additionally, the control module 14 may be configured to control the data distribution module 50 to forward the payload data to the one or more base station transceivers of the cluster of base station transceivers 150 and to control the buffering at the one or more base station transceivers.

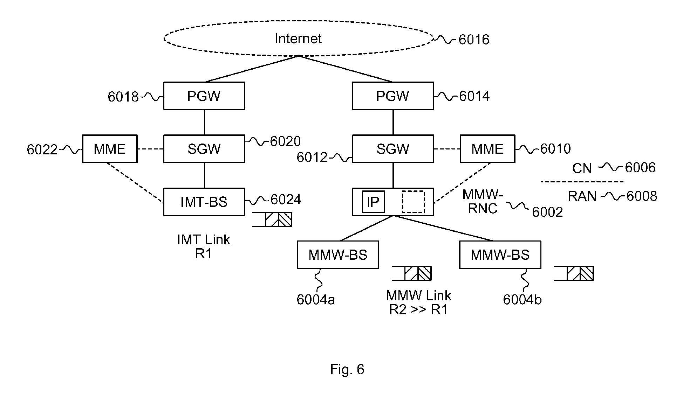

Fig. 6 shows a block diagram of a network architecture of an exemplary embodiment comprising an RNC 6002 and redundant buffering in multiple MMW-BSs 6004a; 6004b (serving and non-serving), i.e. the data packets to be transmitted to a certain MT, which may correspond to the mobile transceiver 300, may be multicast to a set of MMW-BSs 6004a; 6004b and buffered there. Fig. 6 assumes an embodiment where the MMW-BSs 6004a; 6004b are connected to an MMW-RNC 6002, which may be transparent for the CN 6006. The MMW-RNC 6002 may correspond to or comprise the data distribution module 50, and the MMW-BSs may correspond to the cluster of base station transceivers. Forwarding of packets from MMW-RNC 6002 to the MMW-BSs 6004a; 6004b may be above PDCP layer, so the data plane of the MMW-RNC 6002 may use a packet router, which may facilitate a virtualization of the control plane of the MMW-RNC 6002. In an alternative embodiment, the control plane of the MMW-RNC 6002 may be located in the CN 6006, e.g. as additional functionality of an MME 6010. The MMW-RNC 6002 may manage the set of candidate MMW-BSs 6004a; 6004b for a MT, based on handover measurement reports from the MT conducted on the MMW layer, e.g. comprising the apparatus 10, and may configure its packet router to perform the multicasting to the candidate set of MMW-BSs 6004a; 6004b of the MT as information related to the cluster of base station transceivers. The MMW-RNC 6002 may further control a buffer management of the MMW-BSs 6004a; 6004b. The serving MMW-BS may report to the MMW-RNC 6002 the packets successfully transmitted, and the MMW-RNC 6002 may instruct to discard those packets from the buffers of the non-serving MMW-BSs. In embodiments, the numbering scheme of the tunnel protocol between MMW-RNC 6002 and MMW-BS 6004a; 6004b may be used as and/or be a basis for the sequence number.

The redundant buffering may refer to downlink transmissions. In uplink, the data plane of the MMW-RNC 6002 may be responsible for routing of packets only. Fig. 6 further shows the distinction between the Radio Access Network (RAN) 6008 comprising the MMW-RNC 6002 and the MMW-BSs 6004a; 6004b, and the Core Network 6006 comprising the connection to the Internet 6016. Fig. 6 further shows the Mobility Management Entity (MME) 6010, which may correspond to the mobility management unit 100, of the MMW mobile communication system, which may correspond to the first mobile communication system 1000. The MME 6010 is connected to the Serving GateWay 6012 of the MMW mobile communication system and the MMW-RNC 6002. Fig. 6 further shows the Packet data network Gateway (PGW) 6014, which is connected to the SGW 6012 and the Internet 6016. Fig. 6 further shows a PGW 6018, which is connected to a SGW 6020, which is connected to a MME 6022 of the IMT mobile communication system, which may correspond to the second mobile communication system 2000. The MME 6022 may correspond to the mobility management unit 200. The MME 6022 and the SGW 6020 are connected to an IMT-BS 6024, which may correspond to the base station transceiver 250. Figs. 5-6 relate to a LTE-like network architecture/terminology and show different network entities for IMT and MMW layers; (some of) the entities may also be combined together.

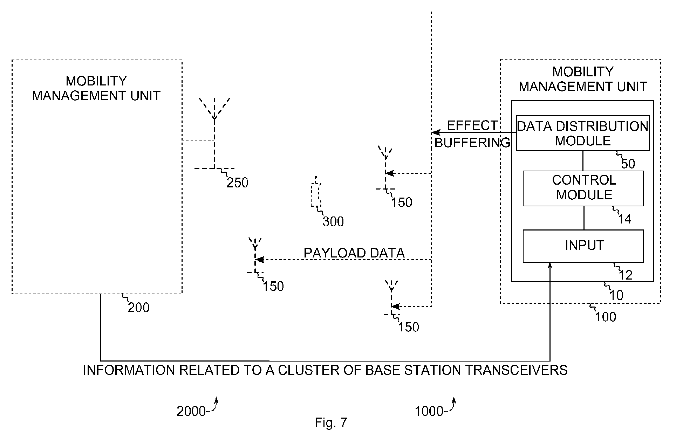

Fig. 7 illustrates a block diagram of an embodiment of the apparatus 10 comprising the data distribution module 50. The data distribution module 50 may be configured to forward payload data to at least a subset of the one or more base station transceivers of the cluster of base station transceivers 150. Fig. 7 further shows the apparatus 10 further comprising the input 12 and the control module 14. The control module 14 is coupled to the input 12 and the data distribution module 50. Fig. 7 further shows the mobility management unit 200 providing the information related to the cluster of base station transceivers and further shows the base station transceiver 250 of the second mobile communication system 2000, and the mobility management unit 100 of the first mobile communication system 1000 comprising the apparatus 10.

In various embodiments, the control module 14 may be further configured to effect data routing of payload data for the mobile transceiver 300 to the one or more base station transceivers of the cluster of base station transceivers 150 based on the information related to the cluster of base station transceivers. The control module 14 may be configured to control one or more network entities to forward the payload data to at least a subset of the one or more base station transceivers.

In at least some embodiments, the at least one input may be configured to obtain information related to one or more measurement results measured by the mobile transceiver 300 on radio signals of the cluster of base station transceivers 150. The control module 14 may be configured to effect the data buffering based on the information related to the one or more measurement results. In at least some embodiments, the information related to the one or more measurement results may correspond to or comprise information related to handover measurement reports determined by the mobile transceiver 300. In at least some embodiments, the control module 14 may effect the data buffering based on the information related to the one or more measurement reports, e.g. based on advantageous measurements related to one of the one or more base station transceivers.

In various embodiments, the at least one input 12 may be configured to obtain information related to a location of the mobile transceiver 300. The control module 14 may be configured to effect the data buffering based on the information related to the location of the mobile transceiver and information related to the location of the one or more base station transceivers of the cluster of base station transceivers 150. In at least some embodiments, the control module 14 may be configured to effect the data buffering based on a distance of the mobile transceiver and the one or more base station transceivers or based on a LOS of the one or more base station transceivers. The information related to the location of the mobile transceiver and/or the information related to the location of the one or more base station transceivers may comprise an absolute location of the mobile transceiver and/or the one or more base station transceivers, e.g. as geometric coordinates or Global Positioning System (GPS) coordinates, or a relative location of the mobile transceiver and/or the one or more base station transceivers, relative to an arbitrary point of the first 1000 or second 2000 mobile communication system, respectively.

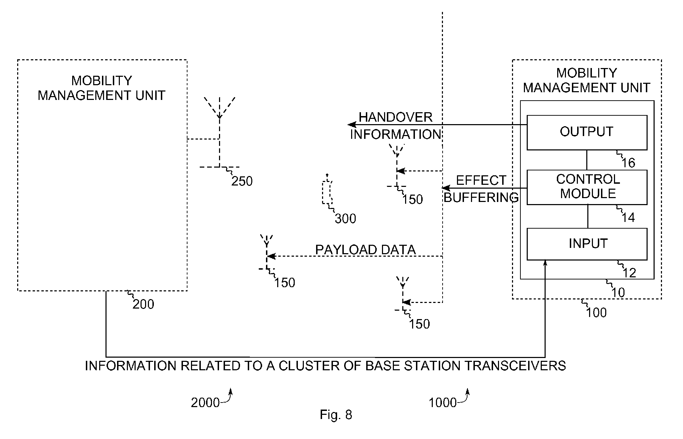

Fig. 8 illustrates a block diagram of an embodiment of the apparatus 10 further comprising at least one output 16 configured to provide handover information. The control module 14 may be further configured to determine the handover information based on the information related to the cluster of base station transceivers and the information related to the one or more measurement results. In at least some embodiments, the control module 14 may provide the handover information based on the information related to the one or more measurement reports, e.g. based on advantageous measurements related to one of the one or more base station transceivers. Fig. 8 further shows the apparatus 10 further comprising the input 12 and the control module 14. The control module 14 is coupled to the input 12 and the output 16. Fig. 8 further shows the mobility management unit 200 providing the information related to the cluster of base station transceivers and further shows the base station transceiver 250 of the second mobile communication system 2000, and the mobility management unit 100 of the first mobile communication system 1000 comprising the apparatus 10.

Additionally or alternatively, the control module 14 may be configured to determine the handover information based on the information related to the cluster of base station transceivers, the information related to the location of the one or more base station transceivers of the cluster of base station transceivers 150 and the information related to the location of the mobile transceiver 300. In at least some embodiments, the control module 14 may be configured to provide the handover information based on a distance of the mobile transceiver and the one or more base station transceivers or based on a LOS of the one or more base station transceivers.

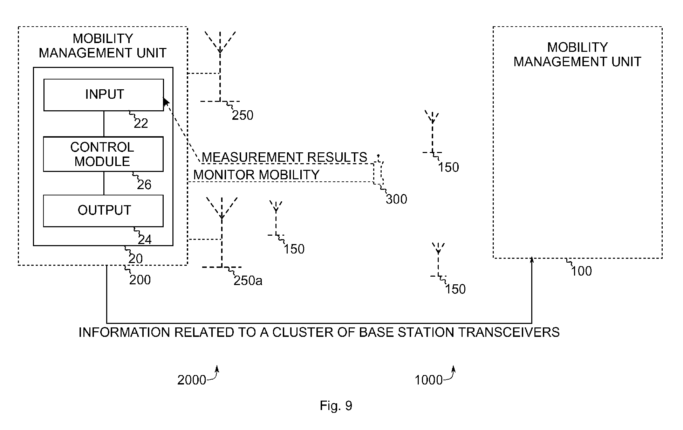

Fig. 9 illustrates a block diagram of an embodiment of an apparatus 20 suitable for a mobility management unit 200. The mobility management unit 200 monitors a mobility of a mobile transceiver in a first mobile communication system 1000. The mobility management unit is comprised in a second mobile communication system 2000.

In at least some embodiments, the mobility of a mobile transceiver may comprise at least one element of the group of a location of the mobile transceiver, a movement of the mobile transceiver, a movement vector of the mobile transceiver, and a cell association of the mobile transceiver.

The apparatus 20 comprises at least one input 22 to obtain information related to one or more measurement results measured by a mobile transceiver 300 on radio signals of one or more base station transceivers 250; 250a of the second mobile communication system 2000.

In at least some embodiments, the mobile transceiver may be configured to measure transmission properties of radio signals received from base station transceivers of the first 1000 and/or second 2000 mobile communication system. The mobile transceiver may be configured to measure a signal strength of the base station transceivers, for example. In various embodiments, the radio signals of the one or more base station transceivers 250; 250a may correspond to radio signals of the second mobile communication system, e.g. 5G radio signals, LTE-A radio signals, LTE radio signals, UMTS radio signals, EDGE radio signals, GPRS radio signals, GSM radio signals etc.

An input, e.g. the at least one input 22, may correspond to an interface for receiving information, which may be in digital (bit) values according to a specified code, within a module, between modules or between modules of different entities.

The apparatus 20 further comprises at least one output 24 to provide information related to a cluster of base station transceivers 150 of the first mobile communication system 1000 to a mobility management unit 100 of the first mobile communication system 1000. The information related to the cluster of base station transceivers comprises information related to one or more base station transceivers of the first mobile communication system 100. The mobile transceiver 300 is within a vicinity of a base station transceiver 250 of the second mobile communication system 2000 and within a vicinity of the one or more base station transceivers.

An output, e.g. the at least one output 24, may correspond to an interface for transmitting information, which may be represented by digital (bit) values according to a specified code or protocol, within a module, between modules, or between modules of different entities.

The apparatus 20 further comprises a control module 26 to determine the information related to the cluster of base station transceivers based on the information related to the one or more measurement results measured by the mobile transceiver 300 on the radio signals of the one or more base station transceivers 250; 250a of the second mobile communication system 2000 and based on information related to a location of the one or more base station transceivers of the first mobile communication system 1000. The control module 26 is coupled to the at least one input 22 and the at least one output 24.

In various embodiments, the control module 26 may be configured to determine information related to a location of the mobile transceiver 300. The control module 26 may be configured to determine the information related to the cluster of base station transceivers based on a proximity and/or siting of the mobile transceiver 300 and the one or more base station transceivers. In at least some embodiments, the control module 26 may be configured to determine the information related to the cluster of base station transceivers further based on a line of sight of the one or more base station transceivers 250; 250a and based on the location of the mobile transceiver 300.

In various embodiments, the control module 26 may be configured to determine the location of the mobile transceiver 300 based on the information related to the one or more measurement results. The control module 26 may be configured to triangulate the position of the mobile transceiver based on the information related to the measurement results, and/or the control module 26 may determine the location of the mobile transceiver 300 based on a location fingerprint database based on past measurement results. Alternatively or additionally, the control module 26 may obtain the information related to the location of the mobile transceiver 300 from the mobile transceiver 300.

In at least some embodiments, the control module 26 may be further configured to monitor the location of the mobile transceiver 300. The control module 26 may be further configured to update the information related to the cluster of base station transceivers based on the information related to the location of the mobile transceiver 300 and to provide the updated information related to the cluster of base station transceivers. In various embodiments, the control module 26 may update the information related to the cluster of base station transceivers based on at least one element of the group of a location threshold since the last update, a time threshold since the last update, a measurement threshold, a handover measurement report, and a handover measurement event.

In various embodiments, the control module 26 may be configured to forward the information related to the measurement results measured by the mobile transceiver 300 on the radio signals of the cluster of base station transceivers 150 obtained via the second mobile communication system 2000 to a mobility management unit 100 of the first mobile communication system 1000. In various embodiments, the mobility management unit 100 may obtain the information related to the measurement results either directly from the mobile transceiver 300 or via the second mobile communication system 2000.

In at least some embodiments, the control module 26 may be configured to determine handover selection information based on the information related to the location of the mobile transceiver 300 and the information related to the location of the one or more base station transceivers. The handover selection information may comprise information related to handover to the second mobile communication system 200. In various embodiments, the control module 26 may determine that the second mobile communication system 2000 may provide a more advantageous connection for the mobile transceiver 300 than the first mobile communication system 1000. The control module 26 may determine, that a connection throughput of the second mobile communication system may be higher for the location of the mobile transceiver 300, or that a probability of frequent handovers or connection losses in the first mobile communication system may be above a threshold for a location, for example. The control module 26 may provide the handover selection information to effect an inter system handover of the mobile transceiver 300 from the first mobile communication system 1000 to the second mobile communication system 2000.

More details and aspects of the apparatus 20 (e.g. first mobile communication system, second mobile communication system, base station transceiver, mobile transceiver, information related to the cluster of base station transceivers, mobility management unit, information related to the location of the one or more base station transceivers, information related to one or more measurement results) are mentioned in connection with the proposed concept or one or more examples described above (e.g. Fig. 1 to 8). The apparatus 20 may comprise one or more additional optional features corresponding to one or more aspects of the proposed concept or one or more examples described above or below.

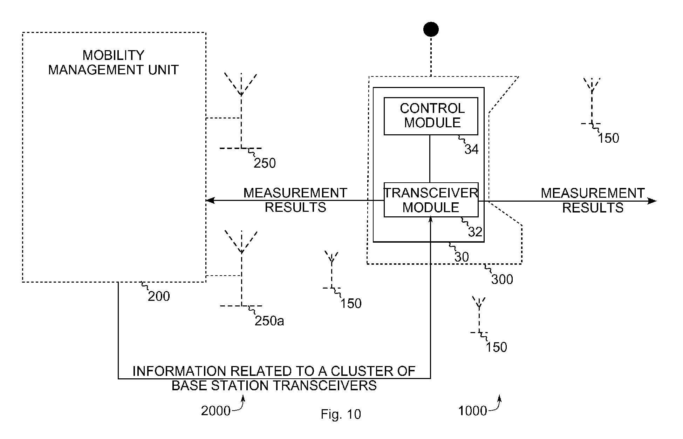

Fig. 10 illustrates a block diagram of an embodiment of an apparatus 30 suitable for a mobile transceiver 300 of a first mobile communication system 1000 and a second mobile communication system 2000. The apparatus 30 comprises at least one transceiver module 32 to communicate with the first mobile communication system 1000 and the second mobile communication system 2000. The mobile transceiver 300 is configured to communicate with the first mobile communication system 1000 and the second mobile communication system 2000 at the same time.

The at least one transceiver module 32 may be implemented as any means for transceiving, i.e. receiving and/or transmitting etc., one or more transceiver units, one or more transceiver devices and it may comprise typical receiver and/or transmitter components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more antennas, etc.

The at least one transceiver module 32 is further configured to obtain information related to a cluster of base station transceivers 150 of the first mobile communication system 1000. The information related to the cluster of base station transceivers comprises information related to one or more base station transceivers of the first mobile communication system 1000. The mobile transceiver 300 is within a vicinity of a base station transceiver 250 of the second mobile communication system 2000 and within a vicinity of the one or more base station transceivers.

The apparatus 30 further comprises a control module 34 to determine information related to one or more measurement results at the mobile transceiver 300 measured on radio signals of the cluster of base station transceivers 150 based on the information related to the cluster of base station transceivers of the first mobile communication system 1000. The control module 34 is further configured to provide the information related to the one or more measurement results at the mobile transceiver 300 measured on the radio signals of the cluster of base station transceivers 150 via the transceiver module 32. In various embodiments, the control module 34 may provide the information related to the one or more measurement results at the mobile transceiver 300 measured on the radio signals of the cluster of base station transceivers 150 to a mobility management unit 100 of the first mobile communication system 100, e.g. via the first mobile communication system 1000 and/or via the second mobile communication system 2000, and/or the control module 34 may be configured to provide the information related to the one or more measurement results at the mobile transceiver 300 measured on the radio signals of the cluster of base station transceivers 150 to a mobility management unit 200 of the second mobile communication system 2000. The control module 34 is coupled to the at least one transceiver module 32.

The control module 34 is further configured to determine information related to one or more measurement results at the mobile transceiver 300 measured on radio signals of the one or more base station transceivers 250; 250a of the second mobile communication system 2000. The control module 34 is further configured to provide the information related to the one or more measurement results at the mobile transceiver 300 measured on the radio signals of the one or more base station transceivers 250; 250a of the second mobile communication system 2000 to a mobility management unit 200 of the second mobile communication system 2000 using the transceiver module 32.

In at least some embodiments, the at least one transceiver module 32 may be configured to obtain the information related to the cluster of base station transceivers of the first mobile communication system 1000 via the second mobile communication system 2000. Alternatively or additionally, the at least one transceiver module 32 may be configured to obtain the information related to the cluster of base station transceivers via the first mobile communication system 1000 when the mobile transceiver 300 is connected to the first mobile communication system.

In various embodiments, the control module 34 may be further configured to obtain information related to a location of one or more base station transceivers comprised in the cluster of base station transceivers 150 and/or information related to a transmission configuration of the one or more base station transceivers comprised in the cluster of base station transceivers 150. The control module 34 may be configured to control the at least one transceiver module 32 based on the information related to the location and/or the information related to the transmission configuration. In at least some embodiments, the location of the one or more base station transceivers may comprise information related to at least one element of the group of an absolute geographical location, a relative location, geographical coordinates, and an altitude of the one or more base station transceivers. In various embodiments, the information related to the transmission configuration may comprise at least one element of the group of a modulation information, timing information, information related to a beam width, and information related to a beam direction.

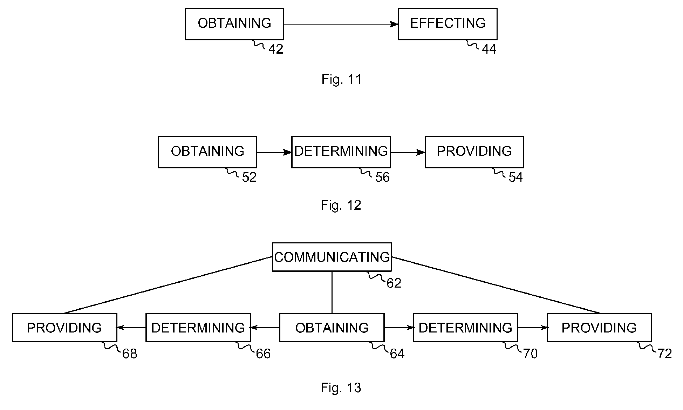

Fig. 11 illustrates a flow chart of an embodiment of a method suitable for a mobility management unit 100 of a first mobile communication system 1000. The method comprises obtaining 42 information related to a cluster of base station transceivers 150 of the first mobile communication system 1000 from a mobility management unit 200 of a second mobile communication system 2000. The information related to the cluster of base station transceivers comprises information related to one or more base station transceivers of the first mobile communication system 1000. The mobile transceiver 300 is within a vicinity of a base station transceiver 250 of the second mobile communication system 2000 and within a vicinity of the one or more base station transceivers. The method further comprises effecting 44 data buffering of payload data for the mobile transceiver 300 at the one or more base station transceivers of the cluster of base station transceivers 150 based on the information related to the cluster of base station transceivers.

Fig. 12 illustrates a flow chart of an embodiment of a method suitable for a mobility management unit 200. The mobility management unit 200 monitors a mobility of a mobile transceiver in a first mobile communication system 1000. The mobility management unit is comprised in a second mobile communication system 2000. The method comprises obtaining 52 information related to one or more measurement results measured by a mobile transceiver 300 on radio signals of one or more base station transceivers 250; 250a of the second mobile communication system 2000. The method further comprises providing 54 information related to a cluster of base station transceivers 150 of the first mobile communication system 1000 to a mobility management unit of the first mobile communication system 1000. The information related to the cluster of base station transceivers comprises information related to one or more base station transceivers of the first mobile communication system 1000. The mobile transceiver 300 is within a vicinity of a base station transceiver 250 of the second mobile communication system 2000 and within a vicinity of the one or more base station transceivers. The method further comprises determining 56 the information related to the cluster of base station transceivers based on the information related to the one or more measurement results measured by the mobile transceiver 300 on the radio signals of the one or more base station transceivers 250; 250a of the second mobile communication system 2000 and based on information related to a location of the one or more base station transceivers of the first mobile communication system 1000.

Fig. 13 illustrates a block diagram of an embodiment of a method suitable for a mobile transceiver 300 of a first mobile communication system 1000 and a second mobile communication system 2000. The method comprises communicating 62 with the first mobile communication system 1000 and the second mobile communication system 2000. The mobile transceiver 300 is configured to communicate with the first mobile communication system 1000 and the second mobile communication system 2000 at the same time. The method further comprises obtaining 64 information related to a cluster of base station transceivers 150 of the first mobile communication system 1000. The information related to the cluster of base station transceivers comprises information related to one or more base station transceivers of the first mobile communication system 1000. The mobile transceiver 300 is within a vicinity of a base station transceiver 250 of the second mobile communication system 2000 and within a vicinity of the one or more base station transceivers. The method further comprises determining 66 information related to one or more measurement results at the mobile transceiver 300 measured on radio signals of the cluster of base station transceivers 150 based on the information related to the cluster of base station transceivers of the first mobile communication system 1000. The method further comprises providing 68 the information related to the one or more measurement results at the mobile transceiver 300 measured on the radio signals of the cluster of base station transceivers 150. The method further comprises determining 70 information related to one or more measurement results at the mobile transceiver 300 measured on radio signals of the one or more base station transceivers 250; 250a of the second mobile communication system 2000. The method further comprises providing 72 the information related to the one or more measurement results at the mobile transceiver 300 measured on the radio signals of the one or more base station transceivers 250; 250a of the second mobile communication system 2000 to a mobility management unit 200 of the second mobile communication system 2000.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Embodiment may provide a simplified and more robust handover procedure for MMW access. Embodiments may further provide a higher reliability and faster handover for MMW due to exploiting support of configuration information and signaling over the second mobile communication system.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) suitable for a mobility management unit (100) of a first mobile communication system (1000), the apparatus (10) comprising
at least one input (12) configured to
obtain information related to a cluster of base station transceivers (150) of the first mobile communication system (1000) from a mobility management unit (200) of a second mobile communication system (2000), wherein the information related to the cluster of base station transceivers comprises information related to one or more base station transceivers of the first mobile communication system (1000), wherein a mobile transceiver (300) is within a vicinity of a base station transceiver (250) of the second mobile communication system (2000) and within a vicinity of the one or more base station transceivers, and
a control module (14) configured to effect data buffering of payload data for the mobile transceiver (300) at the one or more base station transceivers of the cluster of base station transceivers (150) based on the information related to the cluster of base station transceivers.

2. The apparatus (10) of claim 1, wherein the at least one input is configured to obtain information related to one or more measurement results measured by the mobile transceiver (300) on radio signals of the cluster of base station transceivers (150), and wherein the control module (14) is configured to effect the data buffering based on the information related to the one or more measurement results, and/or wherein the at least one input (12) is configured to obtain information related to a location of the mobile transceiver (300) and wherein the control module (14) is configured to effect the data buffering based on the information related to the location of the mobile transceiver and information related to the location of the one or more base station transceivers of the cluster of base station transceivers (150).

3. The apparatus (10) of claim 2 further comprising at least one output (16) configured to provide handover information, wherein the control module (14) is further configured to determine the handover information based on the information related to the cluster of base station transceivers and the information related to the one or more measurement results, and/or wherein the control module (14) is configured to determine the handover information based on the information related to the cluster of base station transceivers, the information related to the location of the one or more base station transceivers of the cluster of base station transceivers (150) and the information related to the location of the mobile transceiver (300).

4. The apparatus (10) of claim 1, wherein the control module (14) is configured to provide a distribution control signal for a data distribution module (50) to effect the data buffering and/or wherein the control module (14) is further configured to effect data routing of payload data for the mobile transceiver (300) to the one or more base station transceivers of the cluster of base station transceivers (150) based on the information related to the cluster of base station transceivers.

5. The apparatus (10) of claim 4 further comprising the data distribution module (50), wherein the data distribution module (50) is configured to forward payload data to at least a subset of the one or more base station transceivers of the cluster of base station transceivers (150).

6. The apparatus (10) of claim 4,
wherein the control module (14) is configured to control the data distribution module (50) to buffer the payload data and to forward the payload data to a base station transceiver of the cluster of base station transceivers (150) connected or to be connected to the mobile transceiver (300), and/or
wherein the control module (14) is configured to control the data distribution module (50) to forward the payload data to the one or more base station transceivers of the cluster of base station transceivers (150) and to control the buffering at the one or more base station transceivers.

7. An apparatus (20) suitable for a mobility management unit (200), the mobility management unit (200) monitoring a mobility of a mobile transceiver in a first mobile communication system (1000), the mobility management unit being comprised in a second mobile communication system (2000), the apparatus (20) comprising at least one input (22) configured to obtain information related to one or more measurement results measured by a mobile transceiver (300) on radio signals of one or more base station transceivers (250; 250a) of the second mobile communication system (2000),
at least one output (24) configured to provide information related to a cluster of base station transceivers (150) of the first mobile communication system (1000) to a mobility management unit (100) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
a control module (26) configured to determine the information related to the cluster of base station transceivers based on the information related to the one or more measurement results measured by the mobile transceiver (300) on the radio signals of the one or more base station transceivers (250; 250a) of the second mobile communication system (2000) and based on information related to a location of the one or more base station transceivers of the first mobile communication system (1000).

8. The apparatus (20) of claim 7,
wherein the control module (26) is configured to determine information related to a location of the mobile transceiver (300), and wherein the control module (26) is configured to determine the information related to the cluster of base station transceivers based on a proximity and/or siting of the mobile transceiver (300) and the one or more base station transceivers, and/or
wherein the control module (26) is further configured to monitor the location of the mobile transceiver (300), and wherein the control module (26) is further configured to update the information related to the cluster of base station transceivers based on the information related to the location of the mobile transceiver (300) and to provide the updated information related to the cluster of base station transceivers, and/or wherein the control module (26) is configured to forward the information related to the measurement results measured by the mobile transceiver (300) on the radio signals of the cluster of base station transceivers (150) obtained via the second mobile communication system (2000) to a mobility management unit (100) of the first mobile communication system (1000).

9. The apparatus (20) of claim 8, wherein the control module (26) is configured to determine handover selection information based on the information related to the location of the mobile transceiver (300) and the information related to the location of the one or more base station transceivers, wherein the handover selection information comprises information related to handover to the second mobile communication system (200)

10. Apparatus (30) suitable for a mobile transceiver (300) of a first mobile communication system (1000) and a second mobile communication system (2000), the apparatus (30) comprising
at least one transceiver module (32) configured to:
communicate with the first mobile communication system (1000) and the second mobile communication system (2000), wherein the mobile transceiver (300) is configured to communicate with the first mobile communication system (1000) and the second mobile communication system (2000) at the same time,
obtain information related to a cluster of base station transceivers (150) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
a control module (34) configured to
determine information related to one or more measurement results at the mobile transceiver (300) measured on radio signals of the cluster of base station transceivers (150) based on the information related to the cluster of base station transceivers of the first mobile communication system (1000), and to provide the information related to the one or more measurement results at the mobile transceiver (300) measured on the radio signals of the cluster of base station transceivers (150) via the transceiver module (32),
determine information related to one or more measurement results at the mobile transceiver (300) measured on radio signals of the one or more base station transceivers (250; 250a) of the second mobile communication system (2000), and
provide the information related to the one or more measurement results at the mobile transceiver (300) measured on the radio signals of the one or more base station transceivers (250; 250a) of the second mobile communication system (2000) to a mobility management unit (200) of the second mobile communication system (2000) using the transceiver module (32).

11. The apparatus (30) of claim 10,
wherein the at least one transceiver module (32) is configured to obtain the information related to the cluster of base station transceivers of the first mobile communication system (1000) via the second mobile communication system (2000), and/or
wherein the control module (34) is further configured to obtain information related to a location of one or more base station transceivers comprised in the cluster of base station transceivers (150) and/or information related to a transmission configuration of the one or more base station transceivers comprised in the cluster of base station transceivers (150), and wherein the control module (34) is configured to control the at least one transceiver module (32) based on the information related to the location and/or the information related to the transmission configuration.

12. Method suitable for a mobility management unit (100) of a first mobile communication system (1000), the method comprising
obtaining (42) information related to a cluster of base station transceivers (150) of the first mobile communication system (1000) from a mobility management unit (200) of a second mobile communication system (2000), wherein the information related to the cluster of base station transceivers comprises information related to one or more base station transceivers of the first mobile communication system (1000), wherein a mobile transceiver (300) is within a vicinity of a base station transceiver (250) of the second mobile communication system (2000) and within a vicinity of the one or more base station transceivers, and
effecting (44) data buffering of payload data for the mobile transceiver (300) at the one or more base station transceivers of the cluster of base station transceivers (150) based on the information related to the cluster of base station transceivers.

13. Method suitable for a mobility management unit (200), the mobility management unit (200) monitoring a mobility of a mobile transceiver in a first mobile communication system (1000), the mobility management unit being comprised in a second mobile communication system (2000), the method comprising
obtaining (52) information related to one or more measurement results measured by a mobile transceiver (300) on radio signals of one or more base station transceivers (250; 250a) of the second mobile communication system (2000),
providing (54) information related to a cluster of base station transceivers (150) of the first mobile communication system (1000) to a mobility management unit of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
determining (56) the information related to the cluster of base station transceivers based on the information related to the one or more measurement results measured by the mobile transceiver (300) on the radio signals of the one or more base station transceivers (250; 250a) of the second mobile communication system (2000) and based on information related to a location of the one or more base station transceivers of the first mobile communication system (1000).

14. Method suitable for a mobile transceiver (300) of a first mobile communication system (1000) and a second mobile communication system (2000), the method comprising
communicating (62) with the first mobile communication system (1000) and the second mobile communication system (2000), wherein the mobile transceiver (300) is configured to communicate with the first mobile communication system (1000) and the second mobile communication system (2000) at the same time,
obtaining (64) information related to a cluster of base station transceivers (150) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
determining (66) information related to one or more measurement results at the mobile transceiver (300) measured on radio signals of the cluster of base station transceivers (150) based on the information related to the cluster of base station transceivers of the first mobile communication system (1000),
providing (68) the information related to the one or more measurement results at the mobile transceiver (300) measured on the radio signals of the cluster of base station transceivers (150),
determining (70) information related to one or more measurement results at the mobile transceiver (300) measured on radio signals of the one or more base station transceivers (250; 250a) of the second mobile communication system (2000), and providing (72) the information related to the one or more measurement results at the mobile transceiver (300) measured on the radio signals of the one or more base station transceivers (250; 250a) of the second mobile communication system (2000) to a mobility management unit (200) of the second mobile communication system (2000).

15. A computer program having a program code for performing at least one of the methods of claims 12, 13 and 14, when the computer program is executed on a computer, a processor, or a programmable hardware component.

## Amended claims

### Amended claims in accordance with Rule 137(2) EPC.

1. An apparatus (10) suitable for a mobility management unit (100) of a first mobile communication system (1000), the apparatus (10) comprising
at least one input (12) configured to
obtain information related to a cluster of base station transceivers (150) of the first mobile communication system (1000) from a mobility management unit (200) of a second mobile communication system (2000), wherein the information related to the cluster of base station transceivers comprises information related to one or more base station transceivers of the first mobile communication system (1000), wherein a mobile transceiver (300) is within a vicinity of a base station transceiver (250) of the second mobile communication system (2000) and within a vicinity of the one or more base station transceivers, and
a control module (14) configured to effect data buffering of payload data for the mobile transceiver (300) at the one or more base station transceivers of the cluster of base station transceivers (150) based on the information related to the cluster of base station transceivers.

2. The apparatus (10) of claim 1, wherein the at least one input is configured to obtain information related to one or more measurement results measured by the mobile transceiver (300) on radio signals of the cluster of base station transceivers (150), and wherein the control module (14) is configured to effect the data buffering based on the information related to the one or more measurement results, and/or wherein the at least one input (12) is configured to obtain information related to a location of the mobile transceiver (300) and wherein the control module (14) is configured to effect the data buffering based on the information related to the location of the mobile transceiver and information related to the location of the one or more base station transceivers of the cluster of base station transceivers (150).

3. The apparatus (10) of claim 2 further comprising at least one output (16) configured to provide handover information, wherein the control module (14) is further configured to determine the handover information based on the information related to the cluster of base station transceivers and the information related to the one or more measurement results, and/or wherein the control module (14) is configured to determine the handover information based on the information related to the cluster of base station transceivers, the information related to the location of the one or more base station transceivers of the cluster of base station transceivers (150) and the information related to the location of the mobile transceiver (300).

4. The apparatus (10) of claim 1, wherein the control module (14) is configured to provide a distribution control signal for a data distribution module (50) to effect the data buffering and/or wherein the control module (14) is further configured to effect data routing of payload data for the mobile transceiver (300) to the one or more base station transceivers of the cluster of base station transceivers (150) based on the information related to the cluster of base station transceivers.

5. The apparatus (10) of claim 4 further comprising the data distribution module (50), wherein the data distribution module (50) is configured to forward payload data to at least a subset of the one or more base station transceivers of the cluster of base station transceivers (150).

6. The apparatus (10) of claim 4,
wherein the control module (14) is configured to control the data distribution module (50) to buffer the payload data and to forward the payload data to a base station transceiver of the cluster of base station transceivers (150) connected or to be connected to the mobile transceiver (300), and/or
wherein the control module (14) is configured to control the data distribution module (50) to forward the payload data to the one or more base station transceivers of the cluster of base station transceivers (150) and to control the buffering at the one or more base station transceivers.

7. An apparatus (20) suitable for a mobility management unit (200), the mobility management unit (200) being configured to monitor a mobility of a mobile transceiver in a first mobile communication system (1000), the mobility management unit being comprised in a second mobile communication system (2000), the apparatus (20) comprising
at least one input (22) configured to obtain information related to one or more measurement results measured by a mobile transceiver (300) on radio signals of one or more base station transceivers (250; 250a) of the second mobile communication system (2000),
at least one output (24) configured to provide information related to a cluster of base station transceivers (150) of the first mobile communication system (1000) to a mobility management unit (100) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
a control module (26) configured to determine the information related to the cluster of base station transceivers based on the information related to the one or more measurement results measured by the mobile transceiver (300) on the radio signals of the one or more base station transceivers (250; 250a) of the second mobile communication system (2000) and based on information related to a location of the one or more base station transceivers of the first mobile communication system (1000).

8. The apparatus (20) of claim 7,
wherein the control module (26) is configured to determine information related to a location of the mobile transceiver (300), and wherein the control module (26) is configured to determine the information related to the cluster of base station transceivers based on a proximity and/or siting of the mobile transceiver (300) and the one or more base station transceivers, and/or
wherein the control module (26) is further configured to monitor the location of the mobile transceiver (300), and wherein the control module (26) is further configured to update the information related to the cluster of base station transceivers based on the information related to the location of the mobile transceiver (300) and to provide the updated information related to the cluster of base station transceivers, and/or wherein the control module (26) is configured to forward the information related to the measurement results measured by the mobile transceiver (300) on the radio signals of the cluster of base station transceivers (150) obtained via the second mobile communication system (2000) to a mobility management unit (100) of the first mobile communication system (1000).

9. The apparatus (20) of claim 8, wherein the control module (26) is configured to determine handover selection information based on the information related to the location of the mobile transceiver (300) and the information related to the location of the one or more base station transceivers, wherein the handover selection information comprises information related to handover to the second mobile communication system (200)

10. Apparatus (30) suitable for a mobile transceiver (300) of a first mobile communication system (1000) and a second mobile communication system (2000), the apparatus (30) comprising
at least one transceiver module (32) configured to:
communicate with the first mobile communication system (1000) and the second mobile communication system (2000), wherein the mobile transceiver (300) is configured to communicate with the first mobile communication system (1000) and the second mobile communication system (2000) at the same time,
obtain information related to a cluster of base station transceivers (150) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
a control module (34) configured to
determine information related to one or more measurement results at the mobile transceiver (300) measured on radio signals of the cluster of base station transceivers (150) based on the information related to the cluster of base station transceivers of the first mobile communication system (1000), and to provide the information related to the one or more measurement results at the mobile transceiver (300) measured on the radio signals of the cluster of base station transceivers (150) via the transceiver module (32),
determine information related to one or more measurement results at the mobile transceiver (300) measured on radio signals of the one or more base station transceivers (250; 250a) of the second mobile communication system (2000), and
provide the information related to the one or more measurement results at the mobile transceiver (300) measured on the radio signals of the one or more base station transceivers (250; 250a) of the second mobile communication system (2000) to a mobility management unit (200) of the second mobile communication system (2000) using the transceiver module (32).

11. The apparatus (30) of claim 10,
wherein the at least one transceiver module (32) is configured to obtain the information related to the cluster of base station transceivers of the first mobile communication system (1000) via the second mobile communication system (2000), and/or
wherein the control module (34) is further configured to obtain information related to a location of one or more base station transceivers comprised in the cluster of base station transceivers (150) and/or information related to a transmission configuration of the one or more base station transceivers comprised in the cluster of base station transceivers (150), and wherein the control module (34) is configured to control the at least one transceiver module (32) based on the information related to the location and/or the information related to the transmission configuration.

12. Method suitable for a mobility management unit (100) of a first mobile communication system (1000), the method comprising
obtaining (42) information related to a cluster of base station transceivers (150) of the first mobile communication system (1000) from a mobility management unit (200) of a second mobile communication system (2000), wherein the information related to the cluster of base station transceivers comprises information related to one or more base station transceivers of the first mobile communication system (1000), wherein a mobile transceiver (300) is within a vicinity of a base station transceiver (250) of the second mobile communication system (2000) and within a vicinity of the one or more base station transceivers, and
effecting (44) data buffering of payload data for the mobile transceiver (300) at the one or more base station transceivers of the cluster of base station transceivers (150) based on the information related to the cluster of base station transceivers.

13. Method suitable for a mobility management unit (200), the mobility management unit (200) monitoring a mobility of a mobile transceiver in a first mobile communication system (1000), the mobility management unit being comprised in a second mobile communication system (2000), the method comprising
obtaining (52) information related to one or more measurement results measured by a mobile transceiver (300) on radio signals of one or more base station transceivers (250; 250a) of the second mobile communication system (2000),
providing (54) information related to a cluster of base station transceivers (150) of the first mobile communication system (1000) to a mobility management unit of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
determining (56) the information related to the cluster of base station transceivers based on the information related to the one or more measurement results measured by the mobile transceiver (300) on the radio signals of the one or more base station transceivers (250; 250a) of the second mobile communication system (2000) and based on information related to a location of the one or more base station transceivers of the first mobile communication system (1000).

14. Method suitable for a mobile transceiver (300) of a first mobile communication system (1000) and a second mobile communication system (2000), the method comprising
communicating (62) with the first mobile communication system (1000) and the second mobile communication system (2000), wherein the mobile transceiver (300) is configured to communicate with the first mobile communication system (1000) and the second mobile communication system (2000) at the same time,
obtaining (64) information related to a cluster of base station transceivers (150) of the first mobile communication system (1000), wherein the information related to the cluster of base station transceivers comprises information related to one or more base station transceivers of the first mobile communication system (1000), wherein the mobile transceiver (300) is within a vicinity of a base station transceiver (250) of the second mobile communication system (2000) and within a vicinity of the one or more base station transceivers, and
determining (66) information related to one or more measurement results at the mobile transceiver (300) measured on radio signals of the cluster of base station transceivers (150) based on the information related to the cluster of base station transceivers of the first mobile communication system (1000),
providing (68) the information related to the one or more measurement results at the mobile transceiver (300) measured on the radio signals of the cluster of base station transceivers (150),
determining (70) information related to one or more measurement results at the mobile transceiver (300) measured on radio signals of the one or more base station transceivers (250; 250a) of the second mobile communication system (2000), and providing (72) the information related to the one or more measurement results at the mobile transceiver (300) measured on the radio signals of the one or more base station transceivers (250; 250a) of the second mobile communication system (2000) to a mobility management unit (200) of the second mobile communication system (2000).

15. A computer program having a program code for performing at least one of the methods of claims 12, 13 and 14, when the computer program is executed on a computer, a processor, or a programmable hardware component.
